# EUROPEAN PATENT APPLICATION

(11) **EP 1 340 806 A1**
(43) Date of publication of application: **03.09.2003**
(21) Application number: 01980999.5
(22) Date of filing: 07.11.2001
(51) Int. Cl.: C11D 17/00, C11D 1/10, C11D 11/00, B01J 2/04, B01J 2/16

(54) **GRANULAR SURFACTANT AND PROCESS FOR PRODUCING THE SAME**

(30) Priority: 08.11.2000 JP 2000340442; 12.07.2001 JP 2001212121
(71) Applicant: Ajinomoto Co., Inc., Tokyo 104-8315 (JP)
(72) Inventor: NISHIKAWA, Makoto, Kawasaki-shi, Kanagawa 210-8681 (JP); YAMAGUCHI, Yoshinori, Kawasaki-shi, Kanagawa 210-8681 (JP); TOBITA, Kazuhiko, Kawasaki-shi, Kanagawa 210-8681 (JP)
(74) Representative: Nicholls, Kathryn Margaret
(86) International application number: JP0109721
(87) International publication number: WO02038721

(57) **Abstract**

A granular surfactant which is obtained, for example, by simultaneous granulation and drying by spraying a solution or slurry, in which a whole or a part of a surfactant is dissolved or dispersed in water or warm water, in a fluidized bed where hot air is introduced, and then by classification of the granules obtained in the above step to remove granules having lower diameters. Typically, a weight ratio of granules having a diameter of 0.1 mm or less is 2.0 wt % or less and a median diameter is 0.17 mm or more. The granular surfactants are easily manufactured and have high water solubility, reduced powder dust, and fluidities.

## Description

### Technical Field

The present invention relates to a granular surfactant and manufacturing method thereof. More specifically, the present invention relates to a granular surfactant which has high solubility, no powder dust, and high fluidities, and manufacturing method thereof.

### Background Art

Surfactants are used for raw materials of various detergents, cosmetics and the like. Depending on each of their properties and purposes for uses, liquid- or solid-state surfactants are used. For solid-state surfactants, properties are required such as easiness in manufacture, as well as non-bulkiness when packaged, suitable fluidities upon use, and short dissolution time when used after dissolution in water. It is also required that they are free from so-called "powder dust" upon use, i.e., scatter of fine powdery surfactants.

As methods for manufacture of solid-state surfactants, a spray drier have been generally employed {Ullmann,"Encyklopadie der technischen Chemie",4 Ahfl., Band 24, S.117, Verlag Chemie(1983) [a citation from Kagaku-Binran Ouyoh Kagaku-Hen (The chemical hand book for applied chemistry), P.1209 (1986) edited by The Chemical Society of Japan]. Further, a manufacturing method in which the spray drier and a fluid bed granulator are combined [Maesaka et al. Funtai-To-Kogyo (Powder and Industry), 21, 10, P.32 (1989)] or a manufacturing method by means of a drum drier [Saburo Kamei, Kagakukikai-No-Riron-To-Keisan (Theory and mathematics of chemical devices) (second edition) P.367, Sangyo Tosho (Industrial Books) (1975)]} are known.

However, in the manufacture by using a spray drier, a problem arises that fine powders are produced to cause powder dust, and that dissolution needs a prolonged period of time because of easy formation of "gel-like agglomerate powder" in the process of dissolution. There is also a problem of large bulkiness because of low specific gravities. When surfactants obtained by using a spray drier are further fluid granulated, the problem of powder dust is solved. However, the surfactants have still low specific gravities and poor solubility because they float on water at the time of dissolution. Moreover, the problem of large bulkiness remains unsolved. When surfactants are manufactured by using a drum drier, a problem in fluidities will arise, i.e., clogs at a hopper-discharge part will frequently occur because a product is obtained in a flake shape. In addition, resulting from irregular particle sizes, there is a problem of handling in that only fine granules will precipitate in the bottom of a container. Furthermore, the process has low productivity and is not suitable for mass production, because a large-size drum drier is not available, and the process requires application of an extremely thin layer of a surfactant solution on a drum is required to be extremely thinly put on drum.

A method is disclosed in which a surfactant, present in a form of a liquid or a paste under atmospheric pressure at 20 to 40°C, is granulated with additives such as an inorganic solid [Japanese Patent Publication (Kohyo) No. 6-510070/1994]. This method relates to a manufacture of detergents for cleaning and the like which are composed of various components such as builders together with surfactants. Therefore, these additives are essentially mixed in surfactants, which cause a problem in that the surfactant, per se, used as raw materials of cosmetics and the like can not be obtained. Further, the publication dose not disclose a method for manufacturing a surfactant which is present as a solid under atmospheric pressure at 25°C.

Some manufacturing method are known which utilize the rolling granulation and the stirring granulation [U.S. Patent No.3886098, Japanese Patent Unexamined Publication (KOKAI) No. 2-232299, Japanese Patent Unexamined Publication (KOKAI) No.2-232300, Japanese Patent Unexamined Publication (KOKAI) No.2-222498, Japanese Patent Unexamined Publication (KOKAI) No.2-222499, Masamitsu Nakamura, Funtai To Kogyo (Powder and Industry), Vol.28, No.6, p. 63(1996), Hiroshi Isa, Yushi (Oils and fats) Vol.48, No.4, p.77(1995) and the like]. However, when these methods are applied to a surfactant in the absence of additives such as inorganic solids, adherent property of the surface of granules will increase in granulation and drying process, which results in formation of dumpling-like mass of particles or aggregation of particles to give a lighter specific gravity. Thus these methods can not be applied.

When surfactants are mixed in a relatively high concentration, such as for preparation of facial cleansing foam, a problem arises in that foams are generated at dissolution of a surfactant (foaming property) and immixed in a solution for dissolution, which results in prolonged period for dissolution and difficulty in deaerating operation because of expansion of foams during the deaeration using a vacuum pan.

### Disclosure of the Invention

An object of the present invention is to provide a granular surfactant which can be easily manufactured, and has high water solubility, reduced powder dust, and fluidity.

Another object of the present invention is to provide a granular surfactant which suppresses foaming property and immixture of foams at dissolution, as well as has the improvements in water solubility, powder dust, and fluidity, when the surfactant is dissolved to prepare a detergent composition such as facial cleansing foam.

The inventors of the present invention conducted intensive researches to achieve the aforementioned objects, and as a result, they found that the objects were successfully achieved by providing a granular surfactant having a specific granule size distribution, a specific bulk density, and a specific ratio of bulk density and true density, or to provide a granular surfactant obtained by a specific manufacturing method. The present invention was achieved on the basis of these findings.

The present invention thus relates to a granular surfactant wherein a ratio in weight of granules having a diameter of 0.1mm or less is 2.0 wt % or less and a median diameter is 0.17mm or more.

The present invention also relates to a granular surfactant wherein, among the aforementioned granular surfactants, a bulk density is 300kg/m³ or more and/or a ratio of bulk density and true density (bulk density/true density) is 0.25 or more.

The present invention further relates to a granular surfactant which is obtained by simultaneous granulation and drying by spraying a solution or slurry, in which a whole or a part of a surfactant is dissolved or dispersed in water or warm water, at an upper part of a fluidized bed where hot air is introduced, and then by a classification of the resulting granules to remove granules having lower diameters.

In addition, the present invention relates to a method of manufacturing a granular surfactant characterized by the step of simultaneous granulation and drying by spraying a solution or slurry, in which a whole or a part of a surfactant is dissolved or dispersed in water or warm water, at an upper part of a fluidized bed where hot air is introduced, and the step of a classification of the resulting granules to remove granules having lower diameters.

### Brief Explanation of the Drawings

Fig. 1 shows an outline of the device used in Examples.
Fig. 2 shows an outline of the process of classification.
Fig. 3 shows an optical microscopic photograph of the granular surfactant obtained in Example 1.
Fig. 4 shows an optical microscopic photograph of the surfactant obtained in Comparative Example 1.
Fig. 5 shows an optical microscopic photograph of the surfactant obtained in Comparative Example 8.
Fig. 6 shows an optical microscopic photograph of the surfactant obtained in Comparative Example 4.

### Best Mode for Carrying out the Invention

Surfactants used in the present invention are not particularly limited. Surfactants which are solid under 1 atmospheric pressure at 25°C are preferred because those surfactants are almost free from so-called "caking," i.e., aggregation and solidification during storage.

Any of ionic surfactants such as anionic surfactants, cationic surfactants, and amphoteric surfactants as well as nonionic surfactants may be used. Generally, ionic surfactants which have a high Krafft point and reduced caking are preferred. Among them, anionic surfactants are preferred because the powder dust is highly reduced.

Ionic surfactants having a Krafft point of 40°C or higher are preferred because those surfactants hardly cause the caking. An upper limit of the Kraft point is not limited as far as the Kraft point is 40°C or higher. The surfactants having the Kraft point of 100°C or less are conveniently used.

As anionic surfactants, a carboxylic acid-type, a sulfate-type, a sulfonic acid-type, and a phosphate-type surfactants may be used. As a counter ion, sodium, potassium, ammonium, magnesium, arginine, lysine and the like may be used. Surfactants in a free form can also be used. Lipophilic moieties (lipophilic groups) include variety of structures, and mostly, alkyl groups, isoalky groups or the like. In addition, those having an acid amide bond, an ester bond, an ether bond or the like in the structure are available. In terms of a chain length of the lipophilic group, those having 8 to 22 carbon atoms are generally available, and those having 10 to 18 carbon atoms are preferred.

Specific examples of the anionic surfactants include a fatty acid, an acylamino acid, an alkyl sulfate, an alkyl sulfonic acid, an alkyl phosphate, an alkyl sulfosuccinic acid, or a salt thereof.

Among them, an N-acylamino acid and a salt thereof are preferable because they can remarkably reduce the caking and the powder dust. N-acylglutamic acid, N-acylglycine, N-acylalanine, and salts thereof are more preferred, and N-acylglutamic acid, N-acylglycine, N-acylalanine, and salts thereof are particularly preferred. Specific examples thereof include lauroyl glutamic acid and its mono- or di-salt of sodium or potassium, myristoyl glutamic acid and its mono- or di-salt of sodium or potassium, palmitoyl glutamic acid and its mono- or di-salt of sodium or potassium, stearoyl glutamic acid and its mono- or di-salt of sodium or potassium, cocoyl glutamic acid and its mono- or di-salt of sodium or potassium, lauroyl glycine and sodium or potassium salt thereof, myristoyl glycine and sodium or potassium salt thereof, palmitoyl glycine and sodium or potassium salt thereof,, stearoyl glycine and sodium or potassium salt thereof, cocoyl glycine and sodium or potassium salt thereof, lauroyl alanine and sodium or potassium salt thereof, myristoyl alanine and sodium or potassium salt thereof, palmitoyl alanine and sodium or potassium salt thereof,, stearoyl alanine and sodium or potassium salt thereof, cocoyl alanine and sodium or potassium salt thereof.

Examples of the cationic surfactants include a quarternary ammonium salt, an amine derivative, a basic amino acid derivative and the like. Examples of lipophilic groups include those of the anionic surfactants mentioned above.

Specific examples of the cationic surfactants include an alkyltrimethyl ammonium salt, a dialkyldimethyl ammomium salt, an amideamine salt and the like.

Examples of the amphoteric surfactants include a carbobetaine amphoteric surfactant, an amidebetaine amphoteric surfactant, a sulfobetaine amphoteric surfactant, a hydroxysulfobetaine amphoteric surfactant, an amidesulfobetaine amphoteric surfactant, a phosphobetaine amphoteric surfactant, an imidazoline amphoteric surfactant and the like. Examples of lipophilic groups include those of the anionic surfactants mentioned above.

Examples of the nonionic surfactants include a polyoxyethylene-type, a polyhydric alcohol ester-type, a ethylene oxide propylene oxide block copolymer-type surfactants and the like. Those having hydroxyl group, an ether bond, an acid amide bond, an ester bond and the like in the structure are available. Lipophilic groups are almost the same as those of the anionic surfactants. Examples of the lipophilic groups include those of the anionic surfactants mentioned above.

Specific examples of the nonionic surfactants include a glycerin monoalkyl ether, a glycerin fatty acid ester, a polyglycerin fatty acid ester, a polyoxyethyleneglycerin fatty acid ester, a sorbitane fatty acid ester, a polyethyleneglycol fatty acid ester, a polyoxyethylenealkyl eter, a polyoxyethylenepolyoxypropylenealkyl ether and the like.

According to the present invention, granular surfactants can be obtained without addition of additives such as builders. However, the surfactants used in the present invention are not essentially be composed of a single component. The surfactants may contain other ingredients such as inorganic substances including salts and the like and organic substances, so far that the advantageous effects of the present invention are not destroyed. In general, applicable concentrations of the above additional ingredients may be 20% by weight or less, which depends on properties of the surfactants.

Purposes for use of the granular surfactants of the present invention include detergents for cleaning such as body shampoos, hair shampoos, hand soap, facial cleansing foam, facial cleansing powder, solid soap and the like.

According to the granular surfactants of the present invention, a ratio in weight of granules having a diameter of 0.1mm or less is 2.0 wt % or less, and a median diameter is 0.17mm or more. When a weight ratio of granules having a diameter 0.1mm or less exceeds 2.0 wt % or when a median diameter is less than 0.17 mm, the powder dust may increase.

An upper limit of a median diameter is not limited. Preferably, the median diameter is 3.0 mm or less. When a median diameter exceeds 3.0 mm, solubility or fluidity may sometimes deteriorate.

In particular, when the surfactants are dissolved in a ratio of 20 % or less, such as those used as liquid detergents and the like, the median diameter is preferably 1.2 mm or less. When a median diameter exceeds 1.2 mm, solubility may sometimes be lowered because of a decrease of surface area per unit weight.

Further, when the surfactants are mixed at 15 % or more, such as those used as facial cleansing foam and the like, the median diameter is preferably 0.85 mm or more. When a median diameter is less than 0.85, aggregation may sometimes occur to give large lumps immediately after immersion, which results in poor solubility.

For the above application, an upper limit of a median diameter is not limited. A median diameter is preferably 3.0 mm or less. When a median diameter exceeds 3.0 mm, solubility may sometimes be lowered because of a decrease of surface area per unit weight.

The bulk density of the granular surfactant of the present invention is preferably 300 kg/m³ or more. When a bulk densities is less than 300 kg/m³, bulkiness at package may sometimes become higher, and float at dissolution may occur to deteriorate solubility.

In particular, when the surfactants are mixed at 15 % or more, such as those used as facial cleansing foam and the like, the bulk density may preferably be 490 kg/m³ or more. When a bulk density is less than 490 kg/m³, float of the surfactant may frequently occur at introduction in a dissolution tank, and foams may sometimes be generated. The generation of the foams may result in a decrease in a dissolution rate, and also result in suck of foams at precipitation to give an undesirable mousse-like final product.

A maxim of the bulk density is not limited. The bulk density may preferably be 800 kg/m³ or less. When a bulk density exceeds 800 kg/m³, particle diameters may likely be increased and a surface area per unit weight may become extremely small, which may sometimes result in poor solubility.

A ratio of bulk density and true density (bulk density/ true density) of the granular surfactant of the present invention may preferably be 0.25 or more. The ratio smaller than 0.25 means that many gaps are formed during granulation, which may results in disadvantages of easy floating at dissolution and vast bulkiness at filling packaging.

A maxim of the ratio of bulk density and true density is not limited. The ratio may preferably be 0.6 or less. When the ratio exceeds 0.6, coating granulation needs to be performed very slowly and carefully to avoid the formation of gaps, which may sometimes leads to deterioration of productivity.

The bulk density in the present invention means a roughly filled bulk density which is measured by means of a 100 ml bulk-density-measuring- cup (50.3 mm φ x 50.3 mm H) by feeding a powder downward in the cup at a feeding rate of about 50 g/min from over 30 cm so as to be uniformly dispersed, and then by leveling an upper surface and measuring a weight.

The particle size distribution in the present invention means a weight-based particle size distribution according to the sieve analysis method which comprises the steps of classifying granules using various sieves of from 0.1 mm to 1.7 mm shaken by a vibrator manufactured by Rctsch at an amplitude of 2.0 mm for 15 minutes and then weighing particles on each sieve.

The median diameter means a particle size at 50 % accumulation which is obtained by the weight-based particle size distribution accumulated by approximation using straight lines between plots.

The true density in the present invention is measured in the following manner: Pycnometer, AccuPyc1330 manufactured by Micromeritics is used, and nitrogen is purged 5 times before measurements. By setting an equilibrium time at 0.01 psig/min, which is considered as steady state, measurements are conducted at 25°C using about 2 g of a sample. The arithmetic mean value of the results of three measurements is obtained to give the true density.

The granular surfactant of the present invention can be manufactured by the following method.

The surfactant can be manufactured by simultaneous granulation and drying by spraying a solution or slurry, in which a whole or a part of a surfactant is dissolved or dispersed in water or warm water, at an upper part of a fluidized bed where hot air is introduced, and then by a classification of the resulting granules to remove granules having lower diameters.

The surfactants as raw materials are used as a solution in water or warm water. The solution may be a completely dissolved solution or a partly dissolved solution (hereinafter both of them are referred to as "a material solution") so far that the solution does not cause clog of spray nozzles.

An airflow of the hot air from the fluidized bed plate is not particularly limited as far as the rate successfully achieves sufficient fluidization of powders. A rate of air supply from the fluidized bed plate may preferably be 0.5 to 3.0 m/s. The rate of air supply from the fluidized bed plate means a value obtained by dividing an airflow of hot air by an area of a fluidized bed.

A temperature of the hot air is appropriately determined depending on surfactants used, and may be determined by taking into account of conditions such as promotion of drying, free from difficulty in operation due to stick to walls of equipment. Generally, a temperature of from 70 to 180 °C is preferable.

The spraying into a fluidizing powder layer is ordinarily conducted by using a spray nozzle (main nozzle). The position of the nozzle is not particularly limited as long as the nozzle successfully squirts a material solution at the fluidizing powder. The nozzle is preferably positioned so as to upwardly spray into the fluidizing powder layer.

The material solution sprayed by the spray nozzle generates fine powders to become new cores, as well as achieves coating. By changing a positional relation of the spray nozzle and the surface of fluidizing powder layer, a ratio of an amount to be coated and an amount of the generated fine powder and a particle size of a granulated product can be adjusted. The positional relation is suitably determined depending on properties of the material solution used. When the nozzle is positioned at an upper position of the fluidizing powder layer, the ratio of the generated fine powder tends to increase. When the nozzle is positioned at a lower position of the fluidizing powder layer, the ratio of the coated particles tends to increase.

A spraying rate of the main nozzle is suitably determined depending on properties of the material solution used. An equipment of an additional spray nozzle (sub nozzle) at an outside and upper position of the fluidizing powder layer (a discharge part) is preferred, because coating can be promoted even for light fine powders which are flying for a prolonged period of time in relatively upper position. A spraying rate of the sub nozzle is suitably determined depending on properties of the material solution used.

For controlling a particle size a product, when the granules become too large due to an increased ratio of coating, the large granules may be sieved and crushed to recycle in the system as cores.

As for the spray nozzles, either or both of the main nozzle and the sub nozzle may preferably be 2-way fluid nozzles to produce minute liquid droplets. By changing airflow volumes from the 2-way fluid nozzles, diameters of the liquid droplets generated by spraying, amounts of fine powder attached by the liquid droplets, thickness of the coating to the fine powder used as cores, densities of the granulated product and the like can be controlled. The airflow volume may suitably be determined depending on density of the material solution, properties of the surfactants used such as surface tension and the like.

For manufacture of the granular surfactants, an introduction of hot air to the discharge part as secondary air may promote drying. A temperature of the secondary air is preferably the same level or slightly lower level compared to the hot air from the fluidized bed taking into account of a balance in the system.

Either of a batch operation and a continuous operation may be applied for the manufacture. A continuous operation is preferable, because the classification step is introduced. In the manufacture by the continuous operation, granules having smaller particle sizes, among granules discharged, may be put back in the system by an appropriate classification means so as to be further grown as cores, and granules developed to have a suitable size are recovered as a product. By applying this process, fine powders which cause the powder dust can be removed from the product. The means for classification are not limited as long as the means can remove the fluid having smaller diameters. A countercurrent gravity classifier may be preferred in which classification is conducted by air of countercurrent toward the gravity. A classification air rate for the classification by using the countercurrent gravity classifier may be determined depending on properties of the surfactant used, and may preferably be 0.5 m/s to 3.0 m/s.

The manufacturing method of the present invention is the fluid coating granulation method in which the granulation and drying is simultaneously conducted. The coating granulation mentioned above does not mean that each particle of surfactant granules under being dried aggregates for development, but the term means the granulation method in which a cycle of thin coating on dried surfactant granules with the material solution and successive drying is repeated to allow gradual development while keeping their granule shapes. By applying the aforementioned development, granules of heavy weights can be obtained even they have small diameters of 3.0 mm or less.

### Examples

The present invention will be more specifically explained by the following examples. However, the present invention is not limited to the examples.

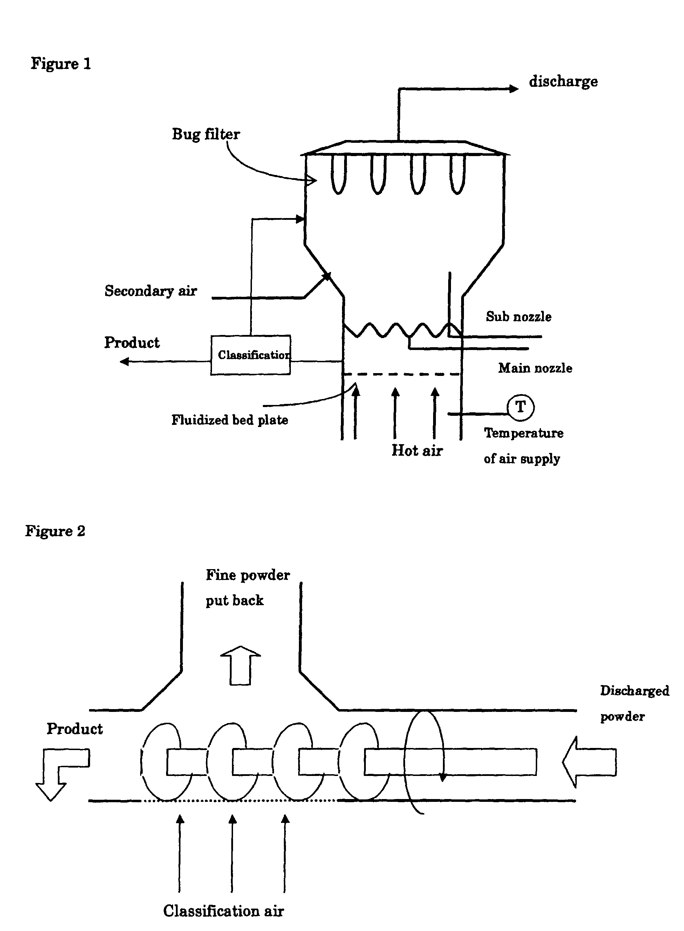

An area of a fluidized bed plate of the apparatus used is 0.1 m², and as shown in Figure 1, the apparatus is equipped with 2-way fluid nozzle (main nozzle) upward in the fluidized layer, and has a mechanism that 2-way fluid nozzle (sub nozzle) upward can be further equipped in the discharge part.

As for the discharge of the granular surfactants, continuous discharge by a discharge screw is achievable while maintaining a pressure difference of the fluidized beds so as to allow the weight of the granules in the fluidized layer become approximately uniform. Further, a system is equipped that, among the granular surfactants discharged by means of the screw, those having smaller diameters are put back to the fluidized layer by the classification air of countercurrent toward gravity as shown in Figure 2. The material solution, being a 30 wt% solution heated up to 60°C, was continuously supplied in an entirely dissolved state.

### Example 1: Manufacture of a granular surfactant by using sodium salt of cocoyl glycine ①

As a seed material to become cores, cocoyl glycine sodium (about 2 kg) separately obtained by the spray dry method in Comparative example 1 described below was fluidized beforehand, and then the material solution was sprayed to perform granulation and drying in the condition shown in Table 1.

The median diameter, the particle size distribution by the sieving method, the bulk density, the bulk density/the true density, and the dissolution time are shown in Table 2.

The conditions for manufacturing and the results of the measurement of the following Examples are also shown in Table 1, and 2.

### Example 2: Manufacture of a granular surfactant by using sodium salt of cocoyl glycine ②

Using the same apparatus as that of Example 1, granulation was gradually performed starting from the development of cores by spraying the solution at 60°C under the condition of the absence of granules in the equipment.

### Example 3: Manufacture of a granular surfactant by using sodium salt of cocoyl glycine ③

Using the same apparatus as that of Example 1, cocoyl glycine sodium (about 5.4 kg) obtained in Example 2 was fluidized beforehand in the equipment, then the material solution at 60°C was sprayed.

### Example 4: Manufacture of a granular surfactant by using sodium salt of cocoyl glycine ④

Using the same apparatus as that of Example 1, cocoyl glycine sodium (about 10 kg) having the median diameter at 600 µm and the bulk density at 400 kg/m³ was fluidized beforehand in the equipment, then the material solution at 60°C was sprayed.

### Example 5: Manufacture of a granular surfactant by using sodium salt of cocoyl glycine ⑤

Using an apparatus having the same mechanism as that of Example 1 and 0.017 m² of fluidized bed plate area, cocoyl glycine sodium (about 1 kg) separately obtained by the spray dry method in Comparative example 1 was fluidized beforehand, then the material solution was sprayed, and granulation and drying were conducted under the condition shown in Table 1.

### Examples 6 and 7: Manufacture of granular surfactants using sodium salt of cocoyl glycine ⑥ and ⑦

The 2-way sub nozzle was equipped upward at the discharge part of the same device as that in Example 1, and the material solution at 60 °C was supplied from both side in the absence of a seed material for cores.

### Example 8: Manufacture of a granular surfactant by using sodium salt of cocoyl glycine ⑧

Using the same apparatus as that of Example 6, further introducing dried air (secondary air) 45 degree upward at the discharge part, the material solution was supplied in the absence of a seed material for cores.

### Example 9: Manufacture of a granular surfactant by using sodium salt of cocoyl glycine ⑨

The granulated product obtained using the same device as that of Example 8 was further classified by a sieve of 425µm, and granules of 425µm or more were recovered as a product.

### Example 10: Manufacture of a granular surfactant by using monosodium salt of lauroyl glutamate ①

Using the same apparatus as that of Example 1, the seed material of about 2 kg was fluidized beforehand in the similar manner, then the material solution was supplied.

### Example 11: Manufacture of a granular surfactant by using monosodium salt of lauroyl glutamate ②

The product of Example 10 (about 2 kg) was used as a seed material for cores.

### Example 12: Manufacture a granular surfactant by using monosodium salt of lauroyl glutamate ③

Using the same apparatus as that of Example 1, the material solution was supplied in the absence of a seed material for cores.

### Examples 13, 14, and 15: Manufacture of granular surfactants using mono potassium salt of myristic glutamate, sodium laurate, and sodium lauryl sulfate.

In a similar manner to that in Example 12, the material solution was supplied in the absence of a seed material for cores using each of mono potassium salt of myristic glutamate, sodium laurate, and sodium lauryl sulfate.

As comparative examples for the granular surfactants of the present invention, the properties of the products manufactured by the following conventional method are shown in Table 3.

### Comparative Example 1: Manufacture of sodium salt of cocoyl glycine by spray drier

Manufacture was conducted using spray drier of atomizer type (6200 φ x 10500 H) under the following operation condition.
Concentration of material 30 wt%
Flow amount of supplied liquid 350 L/hr
Temperature of air 135 °C
Amount of air 470 m³/min

### Comparative Example 2: Manufacturing sodium salt of cocoyl glycine by drum drier

Manufacture was conducted using a drum drier having a drum area of 24.8 m² under the following operation condition.
Concentration of material 30 wt%
Flow amount of supplied liquid 77.4 L/hr
Temperature of the drum 134 °C
Drying time 25 sec.

### Comparative Example 3: Manufacture of monosodium salt of lauroyl glutamate by spray drier

Manufacture was conducted using a spray drier of atomizer type (6200 φ x 10500 H) under the following operation condition.
Concentration of material 30 wt%
Flow amount of supplied liquid 350 L/hr
Temperature of air 137 °C
Amount of air 470 m³/min

### Comparative Example 4: Manufacture of monosodium salt of lauroyl glutamate by drum drier

Manufacture was conducted using a drum drier having a drum area of 24.8 m² under the following operation condition.
Concentration of material 30 wt%
Flow amount of supplied liquid 120 L/hr
Temperature of the drum 134 °C
Drying time 25 sec.

### Comparative Example 5: Manufacture of mono potassium salt of myristic glutamate by spray drier

Manufacture was conducted using a spray drier of atomizer type (6200 φ x 10500 H) under the following operation condition.
Concentration of material 30 wt%
Flow amount of supplied liquid 200 L/hr
Temperature of air 115 °C
Amount of air 470 m³/min

### Comparative Example 6: Manufacture of mono potassium salt of myristic glutamate by drum drier

Manufacture was conducted by using a drum drier having a drum area of 24.8 m² under the following operation condition.
Concentration of material 30 wt%
Flow amount of supplied liquid 56.6 L/hr
Temperature of the drum 134 °C
Drying time 25 sec.

### Comparative Example 7: Sodium laurate by drum drier

Commercially available sodium laurate manufactured by spray drier (Nonsa-ru LN-1 manufactured by NOF Corporation) was used without treatment.

### Comparative Example 8: Sodium laurate by spray drier drying followed by the fluid granulation

Commercially available sodium laurate obtained by spray drier drying, followed by the fluidized granulation (EMAL10 manufactured by Kao) was used without treatment.

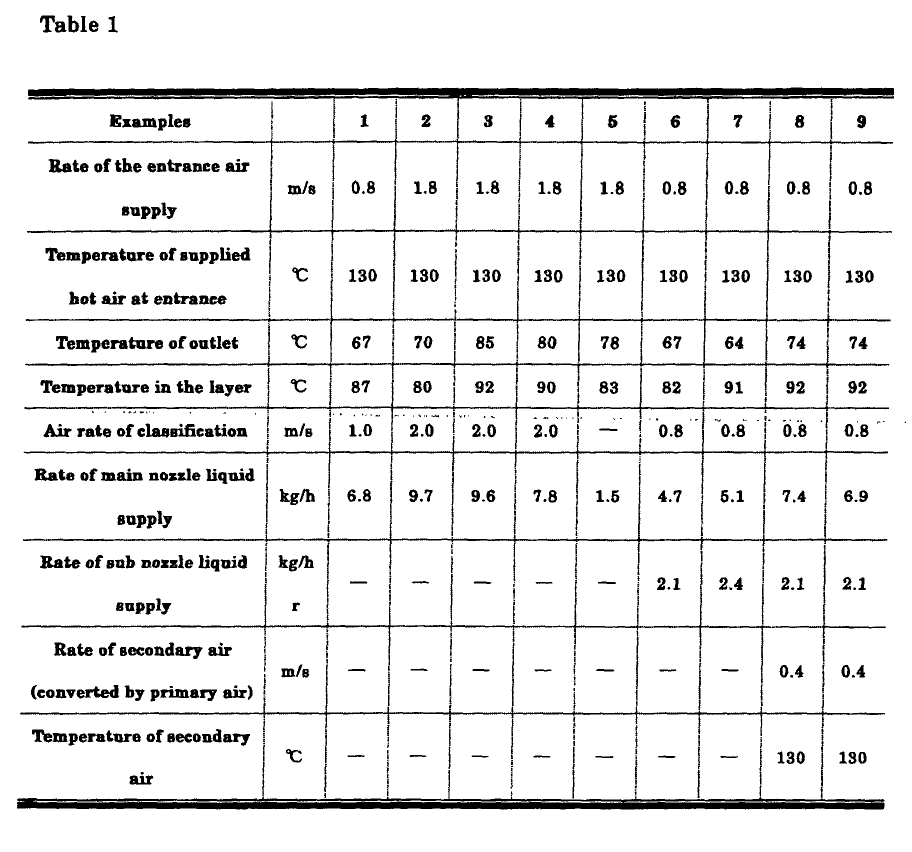

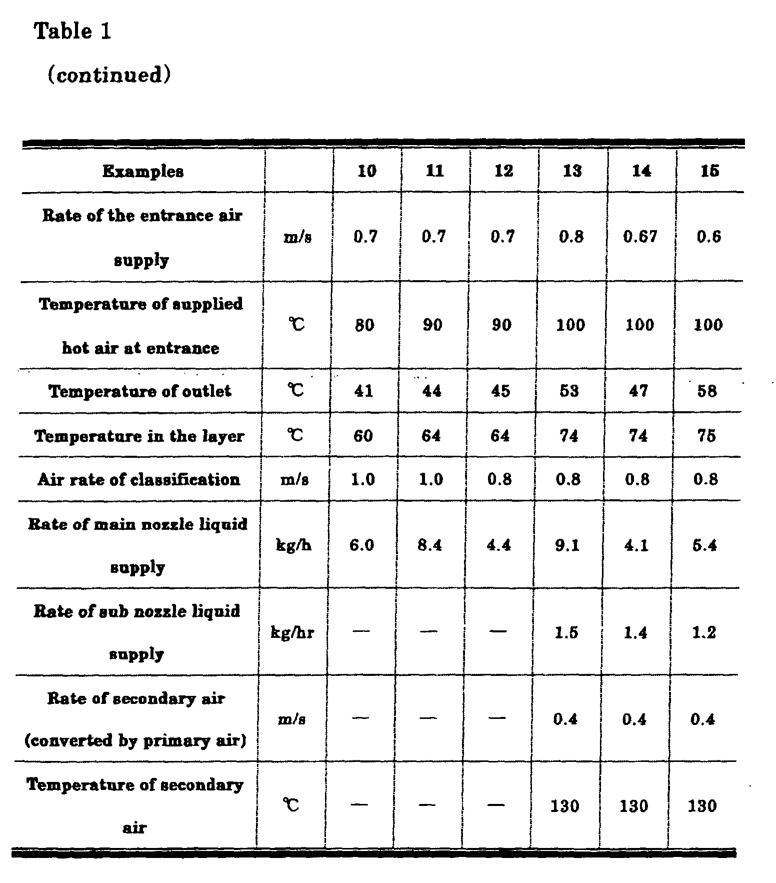

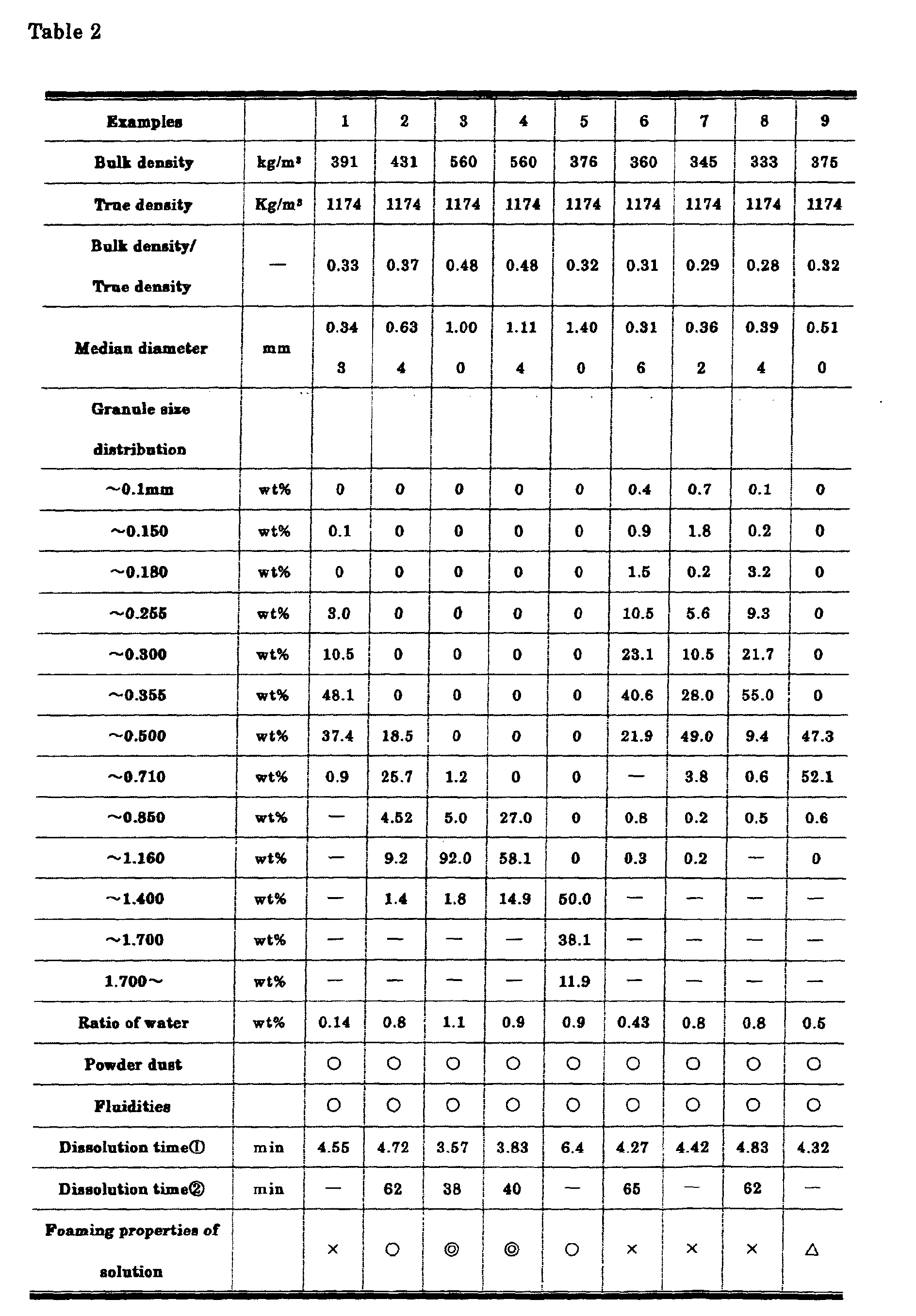

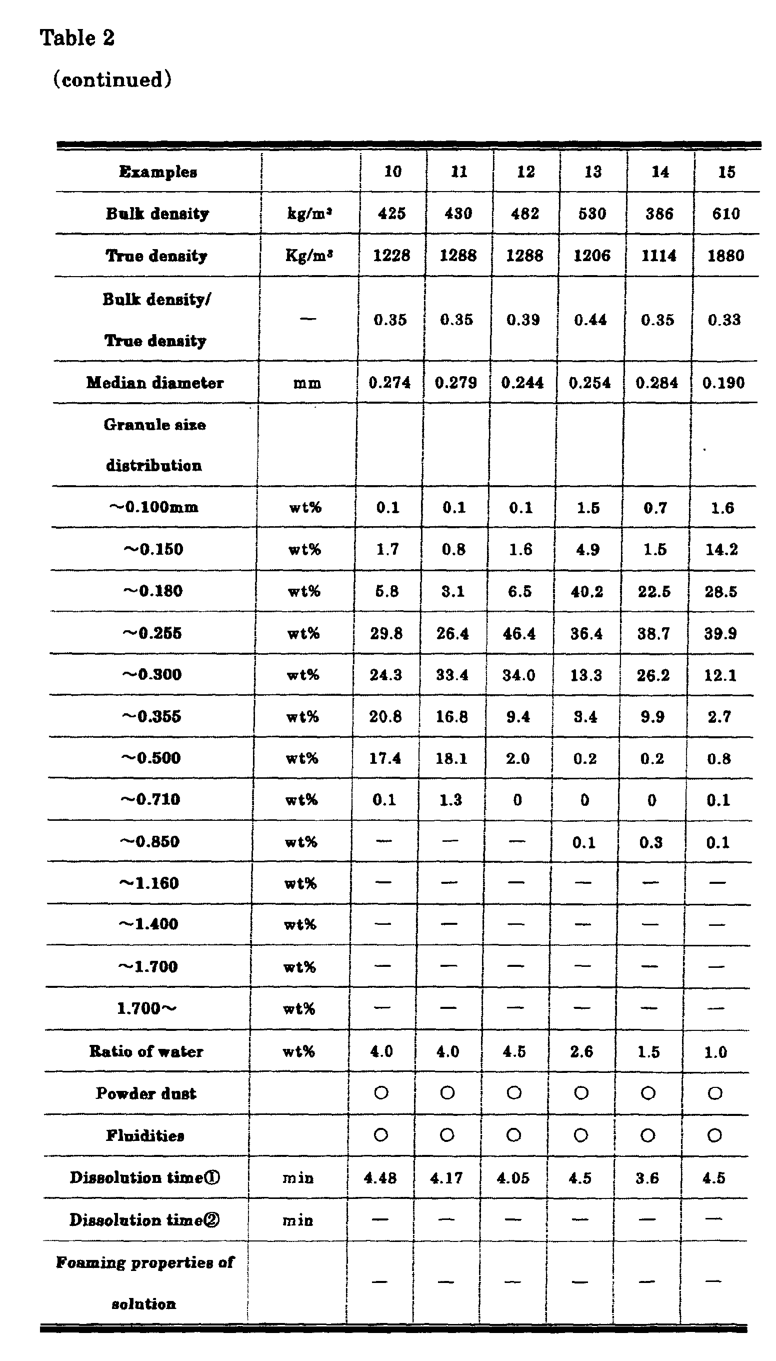

**Table 3**

| **Comprative Example** | | **1** | **2** | **3** | **4** | **5** | **6** | **7** | **8** |
|---|---|---|---|---|---|---|---|---|---|
| **Manufacturing method** | | spray | drum | spray | drum | spray | drum | drum | spray + fluid granulation |
| **Bulk density** | kg/m³ | 156 | 326 | 292 | 330 | 240 | 509 | 393 | 191 |
| **Bulk density/ True density** | ― | 0.13 | 0.28 | 0.24 | 0.27 | 0.20 | 0.42 | 0.35 | 0.11 |
| **Median diameter** | mm | 0.289 | 0.341 | 0.176 | 1 and more | 0.180 | 1 and more | 1 and more | 0.415 |
| **Granular size distribution** | | | | | | | | | |
| **∼0.100mm** | wt% | 3.4 | 2.3 | 21.0 | ― | 4.5 | ― | ― | 8.7 |
| **∼0.150** | wt% | 5.8 | 8,1 | 16.2 | 0.4 | 14.4 | 0.5 | 1.0 | 7.5 |
| **∼0.180** | wt% | 6.6 | 6.1 | 14.7 | 0 | 31.5 | | 0.2 | 4.0 |
| **∼0.255** | wt% | 11.4 | 13.8 | 35.1 | 0.5 | 34.1 | 1.1 | 1.3 | 7.9 |
| **∼0.300** | wt% | 27.8 | 10.9 | 10.7 | 0.7 | 11.8 | 1.0 | ― | 15.2 |
| **∼0.355** | wt% | 35.7 | 10.9 | 1.9 | 0.9 | 2.6 | 1.3 | 2.5 | 19.3 |
| **∼0.500** | wt% | 9.2 | 20.6 | 0.3 | 4.4 | 1.0 | 4.2 | 3.3 | 19.9 |
| **∼0.710** | wt% | 0.1 | 15.0 | ― | 9.1 | 0.1 | 7.0 | 5.0 | 12.4 |
| **∼0.850** | wt% | ― | 4.0 | ― | 8.4 | ― | 4.3 | 3.1 | 2.8 |
| **∼1.180** | wt% | ― | 5.2 | ― | 10.6 | ― | 10.5 | 7.9 | 2.3 |
| **∼1.160** | wt% | ― | 3.1 | ― | 65.1 | ― | 70.1 | 75.7 | ― |
| **∼1.400** | wt% | ― | ― | ― | ― | ― | ― | ― | ― |
| **∼1.700** | wt% | ― | ― | ― | ― | ― | ― | ― | ― |
| **1.700∼** | wt% | ― | ― | ― | ― | ― | ― | ― | ― |
| **Powder dust** | | × | × | × | Δ | × | Δ | Δ | × |
| **Fluidities** | | ○ | Δ | ○ | Δ | ○ | × | Δ | ○ |
| **Dissolution time①** | min | 36.1 | 6.03 | 27.6 | 3.47 | 29.0 | 5.77 | 4.22 | 35.1 |
| **Dissolution time②** | min | 70 and more | 48 | ― | ― | ― | ― | ― | ― |
| **Foaming properties of solution** | | × | Δ | × | Δ | ― | ― | ― | ― |

### Test Example 1: Measurement of dissolution time in preparation of a liquid cleansing composition

For measurement of dissolution time in preparation of a liquid cleansing composition, 27 g of warm water at 60 °C was put in a 50 cc beaker, and then 3.0 g of sample was immersed while a 2 cm piece of magnetic stirrer was rotated at 300 rpm. A period of time up to visual complete dissolution was measured, and the dissolution time was obtained as an average value of three measurements. The results are shown in Tables 2 and 3 as dissolution time ①.

### Test Example 2: Measurement of dissolution time in preparation of facial cleansing foam

For measurement of dissolution time in preparation of a facial cleansing foam, 735 g of purified water, 450 g of glycerin, and 15 g of citric acid monohydrate were placed in a 3 L vacuum emulsification tank. Then, 300 g of a sample was immersed while the mixture was kept warmed at 70 °C, and a period of time up to visual complete dissolution was measured. The results are shown in Table 2, 3 as dissolution time ②.

### Test Example 3: Evaluation of foaming properties in preparation of facial cleansing foam

For evaluation of foaming properties in preparation of a facial cleansing foam, 735 g of purified water, 450 g of glycerin, 15 g of citric acid monohydrate were placed in a 3 L vacuum emulsification tank, and then 300 g of a sample was immersed while the mixture was kept warmed at 70 °C. Observations were conducted by two expert panelists according to the following evaluation criteria, and average points of the evaluation points of the two panelists was calculated. As the evaluation criteria, 1 or more point through less than 2 point is represented by ×, 2 or more point through less than 3 point is represented by Δ, 3 or more point through less than 4 point is represented by ○, and 4 point is represented by ⓞ. The results are shown in Table 2, 3.
1 point: considerable foam
2 point : slightly much foam
3 point : little foam
4 point: no foam

### Test Example 4: Evaluation of the powder dust

For evaluation of powder dust, a state of 50 g of sample was evaluated after dropped from the height of 50 cm.

Functional evaluations were conducted by two expert panelists according to the following evaluation criteria. Using average points of the evaluation points of the two panelists, 1 or more point through less than 2 point is represented by ×, 2 or more point through less than 4 point is represented by Δ, and 4 or more point is represented by ○.
Results are shown in Table 2, 3.
1 point: much powder dust
2 point: slightly much powder dust
3 point: powder dust
4 point: little powder dust
5 point: no powder dust

### Test Example 5: Evaluation of fluidity

For evaluation of fluidities, each sample was supplied to a funnel, and a state of flow of the sample from the funnel was observed and evaluated as follows.

The funnel of 1.5 cm in outlet diameter and 2 cm in height was used, and the sample was supplied at about 50 g/min. Results are shown in Tables 2 and 3.
× : Clogged from the beginning to give no flow.
Δ : Sometimes clogged.
○ : Not clogged to give flow.

Tables 1 to 3 show that the granular surfactants obtained by the manufacturing method of the present invention have high water solubility, a reduced powder dust, and fluidities, and give only a little foam in preparation of facial cleansing foam.

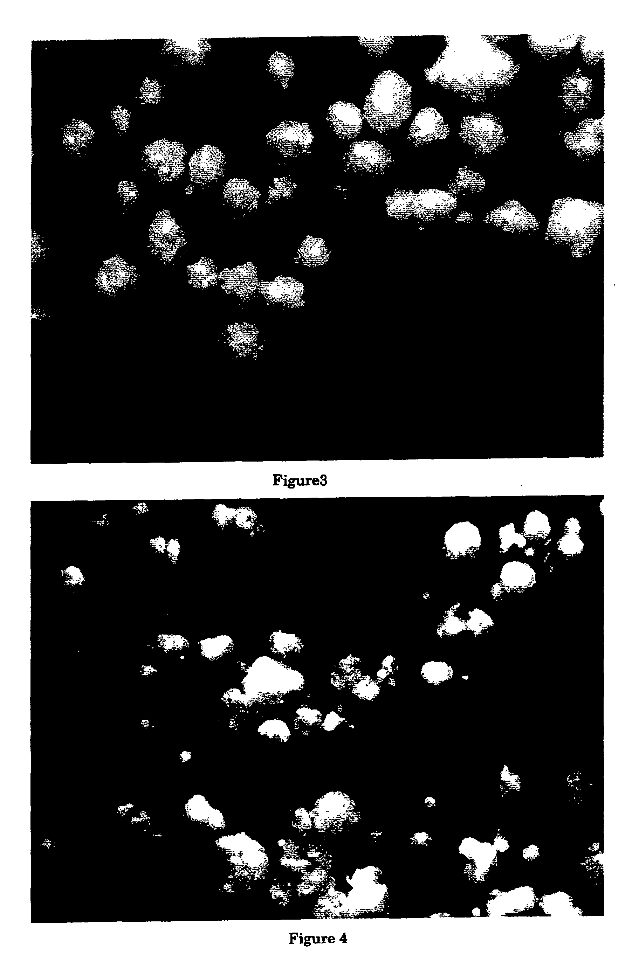

Figure 3 depicts an optical microscopic photograph of the granular surfactant obtained in Example 1 of the present invention. The scale number shown in the photograph represents a unit of millimeter.

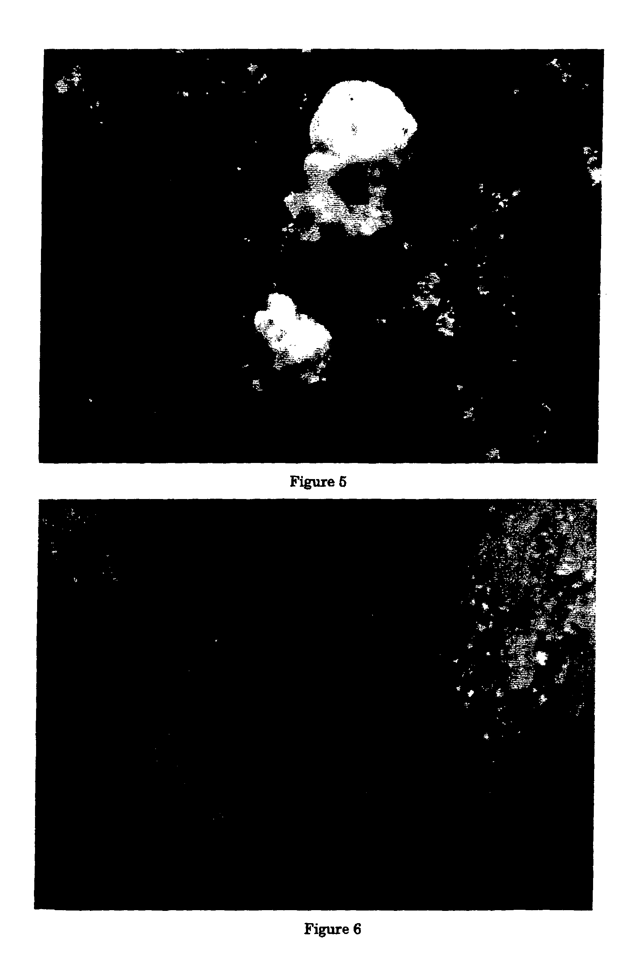

In a similar manner, optical microscopic photographs of Comparative Example 1 (obtained by a spray drier), Comparative Example 8 (fluid bed granulated after drying with a spray drier), and Comparative Example 4 (obtained by a drum drier) are shown in Figure 4 to 6, respectively.

Figure 3 to 6 revealed that the granular surfactants obtained by the manufacturing method of the present invention are uniform spherical particles. Whereas those obtained by the conventional methods have irregular diameters, and they easily cause powder dust because of immixture of fine powders, and have poor fluidities because they have no spherical shapes. In addition, the products obtained by a drum drier are not in spherical shapes but in shapes susceptible to disintegration, and they are considered to readily cause disintegration with shocks during transportation or the like to generate fine powders which is a cause of the powder dust.

### Industrial Applicability

According to the present invention, the granular surfactants can be obtained which are easily manufactured and have high water solubility, reduced powder dust, and fluidities. The granular surfactants are obtainable without addition of additives such as builders.

## Claims

1. A granular surfactant wherein a ratio in weight of granules having a diameter of 0.1 mm or less is 2.0 wt % or less and a median diameter is 0.17 mm or more.

2. A granular surfactant wherein a ratio in weight of granules having a diameter of 0.1 mm or less is 2.0 wt % or less and a median diameter is 0.17 mm or more and 1.2 mm or less.

3. A granular surfactant wherein a ratio in weight of granules having a diameter of 0.1 mm or less is 2.0 wt % or less and a median diameter is 0.85 mm or more.

4. The granular surfactant according to any one of claims 1 to 3, wherein a bulk density is 300 kg/m³ or more.

5. The granular surfactant according to any one of claims 1 to 3, wherein a bulk density is 490 kg/m³ or more.

6. The granular surfactant according to any one of claims 1 to 5, wherein a ratio of a bulk density and a true density (a bulk density/a true density) is 0.25 or more.

7. A granular surfactant which is obtained by simultaneous granulation and drying by spraying a solution or slurry, in which a whole or a part of a surfactant is dissolved or dispersed in water or warm water, at an upper part of a fluidized bed plate where hot air is introduced, and then by classification of the granules obtained in the above step to remove granules having lower diameters.

8. The granular surfactant according to any one of claims 1 to 7, **characterized in that** the surfactant is solid under 1 atmospheric pressure at 25°C.

9. The granular surfactant according to any one of claims 1 to 8, **characterized in that** the surfactant is an anionic surfactant.

10. The granular surfactant according to any one of claims 1 to 9, **characterized in that** a Krafft point of the surfactant is 40°C or higher.

11. The granular surfactant according to any one of claims 1 to 10, **characterized in that** the surfactant is N-acylamino acid or a salt thereof.

12. The granular surfactant according to any one of claims 1 to 11, **characterized in that** the surfactant is N-acylamino glutamate, N-acylglycine, N-acylalanine, or a salt thereof.

13. The granular surfactant according to any one of claims 1 to 12, which does not comprise a builder.

14. A method of manufacture of a granular surfactant **characterized by** simultaneous granulation and drying by spraying a solution or slurry, in which a whole or a part of a surfactant is dissolved or dispersed in water or warm water, at an upper part of a fluidized bed plate where hot air is introduced, and successive classification of the resulting granules to remove granules having lower diameters.

15. The method of manufacture of a granular surfactant according to claim 14, **characterized in that** the solution or the slurry is sprayed upward in a fluidized bed.

16. The method of manufacture of a granular surfactant according to any one of claims 14 or 15, **characterized in that** the solution or the slurry is sprayed from multistage spray nozzles.

17. The method of manufacture of a granular surfactant according to any one of claims 14 to 16, **characterized in that** the solution or the slurry is sprayed by at least one of the spray nozzles which is equipped inside of a fluidized powder layer, and by at least one of the spray nozzles which is equipped at upper part outside of the fluidized powder layer (discharge part).

18. The method of manufacture of a granular surfactant according to any one of claims 14 to 17, **characterized in that** granules having lower diameters excluded by the classification are put back in a fluidized powder layer.
